# EUROPEAN PATENT APPLICATION

(11) **EP 4 382 258 A1**
(43) Date of publication of application: **12.06.2024**
(21) Application number: 22853116.6
(22) Date of filing: 03.08.2022
(51) Int. Cl.: B25J 9/10

(54) **ROBOT CONTROL DEVICE, ROBOT CONTROL SYSTEM, AND ROBOT CONTROL METHOD**

(30) Priority: 03.08.2021 JP 2021127715
(71) Applicant: Kyocera Corporation, Kyoto-shi Kyoto 612-8501 (JP)
(72) Inventor: GRACIA, Fidelia, Kyoto-shi, Kyoto 612-8501 (JP); ISHIDA, Takayuki, Kyoto-shi, Kyoto 612-8501 (JP); MORI, Masato, Kyoto-shi, Kyoto 612-8501 (JP); UCHITAKE, Masahiro, Kyoto-shi, Kyoto 612-8501 (JP)
(74) Representative: TBK
(86) International application number: PCT/JP2022/029851
(87) International publication number: WO 2023/013698

(57) **Abstract**

A robot control device includes a controller configured to control a robot. The controller is configured to acquire a measurement position of a movement destination of the robot, acquire a measurement result of a position of the robot calculated based on spatial information about an operational space of the robot acquired by a spatial information acquiring unit, and determine whether to perform calibration of the robot based on the measurement position and the measurement result.

## Description

### CROSS-REFERENCE TO RELATED APPLICATIONS

This application claims priority of Japanese Patent Application No. 2021-127715 (filed August 3, 2021), the entire disclosure of which is hereby incorporated by reference.

### TECHNICAL FIELD

The present disclosure relates to a robot control device, a robot control system, and a robot control method.

### BACKGROUND OF INVENTION

Heretofore, a known robot control system performs abnormality diagnosis based on the position of a mark portion at the time of calibration (for example, see Patent Literature 1).

### CITATION LIST

### PATENT LITERATURE

Patent Literature 1: Japanese Unexamined Patent Application Publication No. 2020-116717

### SUMMARY

In an embodiment of the present disclosure, a robot control device includes a controller. The controller is configured to control a robot. The controller is configured to acquire a measurement position of a movement destination of the robot. The controller is configured to acquire a measurement result of a position of the robot calculated based on spatial information about an operational space of the robot acquired by a spatial information acquiring unit. The controller is configured to determine whether to perform calibration of the robot based on the measurement position and the measurement result.

In an embodiment of the present disclosure, a robot control system includes the robot control device and the robot.

In an embodiment of the present disclosure, a robot control method is to be performed by a controller configured to control a robot. The robot control method includes acquiring a measurement position of a movement destination of the robot. The robot control method includes acquiring a measurement result of a position of the robot calculated based on spatial information about an operational space of the robot acquired by a spatial information acquiring unit. The robot control method includes determining whether to perform calibration of the robot based on the measurement position and the measurement result.

### BRIEF DESCRIPTION OF THE DRAWINGS

FIG. 1 is a block diagram illustrating an example configuration of a robot control system according to an embodiment.
FIG. 2 is a schematic diagram illustrating an example configuration of the robot control system according to the embodiment.
FIG. 3 is a schematic diagram illustrating an example of the difference between a tip position orientation based on a sensor and a tip position orientation based on an image.
FIG. 4 is a flowchart illustrating an example procedure of a robot control method according to an embodiment.

### DESCRIPTION OF EMBODIMENTS

Performing calibration again when an abnormality occurs results in an increase in workload. There is a demand for the workload to be reduced when an abnormality occurs. In an embodiment of the present disclosure, a robot control device, a robot control system, and a robot control method enable the workload to be reduced when an abnormality occurs.

### (Overview of Robot Control System 1)

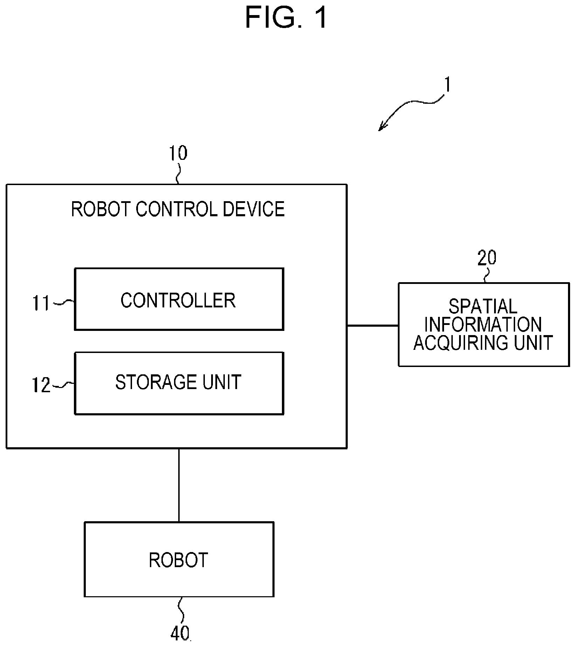

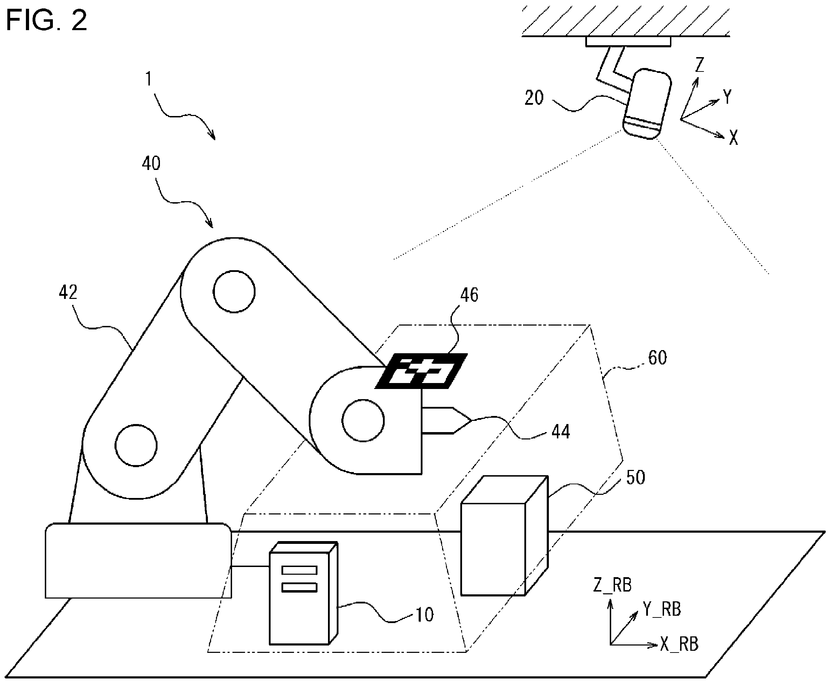

As illustrated in FIG. 1 and FIG. 2, a robot control system 1 according to an embodiment includes a robot 40, a robot control device 10, and a spatial information acquiring unit 20. The robot 40 operates in a prescribed operational space. The spatial information acquiring unit 20 generates depth information of the operational space in which the robot 40 operates. The spatial information acquiring unit 20 calculates the distance to a measurement point located on a surface of an object 50 present in the operational space, as described below. The distance to the measurement point from the spatial information acquiring unit 20 is also referred to as "depth". Depth information is information about the measured depth for each measurement point. In other words, the depth information is information about the distances to the measurement points located on the surfaces of the object 50 present in the operational space. The depth information may be represented as a depth map in which a viewing direction from the spatial information acquiring unit 20 and the depth in that direction are associated with each other. The spatial information acquiring unit 20 generates the depth information of the operational space based on an (X, Y, Z) coordinate system. The robot control device 10 operates the robot 40 based on the depth information generated by the spatial information acquiring unit 20. The robot control device 10 controls and operates the robot 40 based on an (X_RB, Y_RB, Z_RB) coordinate system.

The (X_RB, Y_RB, Z_RB) coordinate system is also referred to as the coordinate system of the robot 40. The (X, Y, Z) coordinate system is also referred to as the coordinate system of the spatial information acquiring unit 20. The coordinate system of the robot 40 may be set as the same coordinate system as that of the spatial information acquiring unit 20 or may be set as a different coordinate system. When the coordinate system of the robot 40 is set as a different coordinate system from that of the spatial information acquiring unit 20, the robot control device 10 converts depth information generated in the coordinate system of the spatial information acquiring unit 20 to the coordinate system of the robot 40.

The number of robots 40 and the number of robot control devices 10 are not limited to one as in the illustrated example and may be two or more. The number of spatial information acquiring units 20 may be one for one operational space as in the illustrated example or may be two or more. Each of the constituent parts will be described more specifically below.

### <Robot Control Device 10>

The robot control device 10 includes a controller 11 and a storage unit 12.

The controller 11 may include at least one processor in order to realize the various functions of the robot control device 10. The processor can execute programs for realizing the various functions of the robot control device 10. The processors may be implemented as a single integrated circuit. An integrated circuit is also referred to as an IC. Processors may be implemented as multiple integrated circuits and discrete circuits connected so as to be able to communicate with each other. The processor may include a CPU (Central Processing Unit). The processor may include a DSP (Digital Signal Processor) or a GPU (Graphics Processing Unit). The processors may be realized based on various other known technologies.

The storage unit 12 may include an electromagnetic storage medium such as a magnetic disk or may include a memory such as a semiconductor memory or a magnetic memory. The storage unit 12 may be configured as an HDD (Hard Disk Drive) or an SSD (Solid State Drive). The storage unit 12 stores various information and programs executed by the controller 11. The storage unit 12 may function as a working memory of the controller 11. The controller 11 may include at least part of the storage unit 12.

The robot control device 10 may further include a communication device configured to be able to communicate with the spatial information acquiring unit 20 and the robot 40 in a wired or wireless manner. The communication device may be configured to be able to communicate using communication methods based on various communication standards. The communication device may be configured using known communication technologies. Detailed description of the hardware, etc., of the communication device is omitted. The functions of the communication device may be realized by a single interface or by a separate interface for each connection destination. The controller 11 may be configured to be able to communicate with the spatial information acquiring unit 20 and the robot 40. The controller 11 may include a communication device.

### <Robot 40>

The robot 40 includes an arm 42, an end effector 44 attached to the arm 42, and a mark 46 provided on the end effector 44, as illustrated in FIG. 2. The mark 46 may be provided on the arm 42 instead of the end effector 44.

The arm 42 may be configured as, for example, a six-axis or seven-axis vertical articulated robot. The arm 42 may be configured as a three-axis or four-axis horizontal articulated robot or scalar robot. The arm 42 may be configured as a two-axis or three-axis orthogonal robot. The arm 42 may be configured as a parallel link robot or the like. The number of axes of the arm 42 is not limited to the number illustrated in the example.

The end effector 44 may include, for example, a grasping hand configured to be able to grasp a work target. The grasping hand may include multiple fingers. The number of fingers on the grasping hand may be two or more. The fingers of the grasping hand may include one or more joints. The end effector 44 may include a suction hand configured to be able to apply suction to a work target. The end effector 44 may include a scooping hand configured to be able to scoop up a work target. The end effector 44 may include a tool, such as a drill, and may be configured to be able to perform various machining operations such as making holes in a work target. The end effector 44 is not limited to these examples and may be configured to be able to perform a variety of other operations.

The robot 40 can control the position of the end effector 44 by operating the arm 42. The end effector 44 may have an axis that serves as a reference for the direction of operation with respect to the work target. If the end effector 44 has an axis, the robot 40 can control the direction of the axis of the end effector 44 by operating the arm 42. The robot 40 controls the start and end of an operation in which the end effector 44 acts on the work target. The robot 40 can move or manipulate the work target by controlling operation of the end effector 44 while controlling the position of the end effector 44 or the direction of the axis of the end effector 44.

The robot 40 may further include a sensor that detects the state of each constituent part of the robot 40. The sensor may detect information about the actual position or orientation of each constituent part of the robot 40, or information about the velocity or acceleration of each constituent part of the robot 40. The sensor may detect the force acting on each constituent part of the robot 40. The sensor may detect the current flowing in a motor driving each constituent part of the robot 40 or the torque of each motor. The sensor may detect information obtained as a result of actual operation of the robot 40. By acquiring the detection results of the sensor, the robot control device 10 can ascertain the results of actual operations of the robot 40. In other words, the robot control device 10 can acquire the state of the robot 40 based on the detection results of the sensor.

The robot control device 10 recognizes the position of the mark 46 or the position of the end effector 44 on which the mark 46 is provided based on an image of the mark 46 captured by the spatial information acquiring unit 20. The robot control device 10 also recognizes the state of the robot 40 based on the image of the mark 46 captured by the spatial information acquiring unit 20. The robot control device 10 can calibrate the robot 40 by comparing the state of the robot 40 acquired based on the detection results of the sensor and the state of the robot 40 acquired based on the image of the mark 46.

### <Spatial Information Acquiring Unit 20>

The spatial information acquiring unit 20 acquires spatial information about the operational space of the robot 40. The spatial information acquiring unit 20 may perform image capturing on the operational space and acquire images of the operational space as spatial information. The spatial information acquiring unit 20 may capture an image of the object 50 present in the operational space, as illustrated in FIG. 2. The spatial information acquiring unit 20 may be configured as a camera. The spatial information acquiring unit 20 may be configured as a 3D stereo camera. The 3D stereo camera captures an image of the object 50 present in the operational space, calculates the distance to a measurement point located on a surface of the object 50 present in the operational space as depth, and generates depth information. The spatial information acquiring unit 20 may be configured as a LiDAR (light detection and ranging). The LiDAR measures the distance to a measurement point located on a surface of the object 50 present in the operational space and generates depth information. In other words, the spatial information acquiring unit 20 may acquire depth information of the operational space as spatial information. The spatial information acquiring unit 20 is not limited to these devices and may be configured as various devices. The spatial information acquiring unit 20 may acquire various other types of information as spatial information, not limited to images or depth information of the operational space. The spatial information acquiring unit 20 may include an image-capturing element. The spatial information acquiring unit 20 may further include an optical system. The spatial information acquiring unit 20 may output a captured image of the operational space to the robot control device 10. The spatial information acquiring unit 20 may generate depth information in the operational space of the robot 40 and output the depth information to the robot control device 10. The spatial information acquiring unit 20 may generate point group information in the operational space of the robot 40 and output the point group information to the robot control device 10. In other words, spatial information may be output in the form of point group data. In other words, point group information may include spatial information. The point group information is information of a set of measurement points located on the surfaces of the object 50 in the operational space and includes the coordinates or color information of each measurement point. The point group information can be said to be data that represents the object 50 in the measurement space using multiple points. As a result of the spatial information being in the form of point group data, the data density can be made smaller than that of spatial information based on the initial data acquired by the spatial information acquiring unit 20.

The spatial information acquiring unit 20 has a FOV (Field of View). The FOV corresponds to the image-capturing range of the spatial information acquiring unit 20. The spatial information acquiring unit 20 can capture an image of a range contained in the FOV The actual field of view size of the spatial information acquiring unit 20 is determined based on the FOV of the spatial information acquiring unit 20 and the depth information. The robot control device 10 can acquire the position and orientation of the mark 46 of the robot 40 based on the actual field of view size of the spatial information acquiring unit 20 and an image including the mark 46 of the robot 40 captured by the spatial information acquiring unit 20. Specifically, the robot control device 10 can calculate the position and orientation of the mark 46 by analyzing the image of the mark 46 using a prescribed algorithm. The prescribed algorithm may include, for example, an equation or table, or may include a program that specifies arithmetic processing. The prescribed algorithm may include parameters for correcting the calculation results based on the image.

### (Example Operation of Robot Control Device 10)

The robot control device 10 makes the robot 40 operate so as to act on a work target such as the object 50 that is present in the operational space or makes the robot 40 operate so as to avoid the object 50. The robot control device 10 makes the robot 40 operate so as to act on the object 50 or avoid the object 50 based on the image of the object 50 captured by the spatial information acquiring unit 20.

### <Calibration>

The controller 11 of the robot control device 10 can acquire the state of the robot 40 based on the position and orientation of the mark 46 in the image captured by the spatial information acquiring unit 20 and can acquire the positional relationship between the robot 40 and the object 50. On the other hand, the controller 11 acquires the state of the robot 40 based on the sensor of the robot 40 such as an encoder installed in the arm 42. The state based on the sensor of the robot 40 represents the position and orientation of the robot 40 more accurately than the state based on the image captured by the spatial information acquiring unit 20. Therefore, the controller 11 can control the robot 40 with high accuracy in the operational space by making the state of the robot 40 based on the image captured by the spatial information acquiring unit 20 match the state of the robot 40 based on the sensor of the robot 40. The operation of making the state of the robot 40 based on the image captured by the spatial information acquiring unit 20 match the state of the robot 40 based on the sensor of the robot 40 is also referred to as calibration. Specifically, the controller 11 performs calibration so as to make the (X, Y, Z) coordinate system of the spatial information acquiring unit 20 match the (X_RB, Y_RB, Z_RB) coordinate system of the robot 40. The controller 11 may estimate the relative positional relationship between the coordinate system of the spatial information acquiring unit 20 and the coordinate system of the robot 40 and align the coordinate system of the spatial information acquiring unit 20 with the coordinate system of the robot 40 based on the estimated relative positional relationship.

The controller 11 may perform the calibration using at least a portion of the FOV of the spatial information acquiring unit 20 as a calibration range 60. In this embodiment, the controller 11 performs the calibration in the calibration range 60 illustrated in FIG. 2. The calibration range 60 is illustrated in FIG. 2 as an area surrounded by two dot chain lines. The calibration range 60 corresponds to the range where the calibration of the robot 40 is performed. The calibration range 60 may include a work area of the robot 40. The calibration range 60 may be a range where the work area of the robot 40 overlaps the FOV

The controller 11 sets a point for performing the calibration within the calibration range 60. The point for performing the calibration is also referred to as a calibration position. The controller 11 moves the mark 46 of the robot 40 to the calibration position and causes the spatial information acquiring unit 20 to capture an image of the mark 46. The controller 11 calculates the position and orientation of the mark 46 based on the image of the mark 46. The controller 11 corrects the position and orientation of the mark 46 based on the image so that the position and orientation of the mark 46 calculated based on the image match the position and orientation of the mark 46 determined based on detection results of the sensor of the robot 40. Correction of the position and orientation of the mark 46 based on the image corresponds to calibration. The position and orientation of the mark 46 is also referred to as tip position orientation. Calibration corresponds to correction of the tip position orientation. The calibration position corresponds to the position where the tip position orientation is corrected.

Specifically, the controller 11 may perform the calibration as described below. The controller 11 generates control information for the robot 40 for moving the mark 46 of the robot 40 to the calibration position. The controller 11 operates the robot 40 based on the control information to move the mark 46 of the robot 40 to the calibration position. The controller 11 acquires the image of the mark 46 from the spatial information acquiring unit 20. The controller 11 calculates the position and orientation of the mark 46 based on the image. The position and orientation of the mark 46 calculated based on the image are also referred to as the tip position orientation based on the image. The controller 11 calculates the position and orientation of the mark 46 determined based on the detection results of the sensor of the robot 40. The position and orientation of the mark 46 calculated based on the detection results of the sensor are also referred to as the tip position orientation based on the sensor. The controller 11 compares the tip position orientation based on the image and the tip position orientation based on the sensor with each other. The controller 11 corrects the tip position orientation based on the image so that the tip position orientation based on the image matches the tip position orientation based on the sensor. The controller 11 may correct the algorithm used to calculate the tip position orientation based on the image. The controller 11 may correct parameters included in the algorithm, or may correct equations, tables, or programs. When multiple calibration positions are set, the controller 11 moves the robot 40 to each calibration position, acquires an image of the mark 46 at the calibration position, and corrects the tip position orientation based on the image.

In the above example, calibration is performed for the position and orientation of mark 46, but the place where calibration is performed is not limited to the position and orientation of mark 46. In other words, the controller 11 may store in advance the positional relationship between the position of the mark 46 and a calibration target, which is a part of the robot 40 to be calibrated and calculate the position and orientation of the calibration target from the position and orientation of the mark 46 based on the image. Calibration can then be performed by making a comparison with the position and orientation of the calibration target based on detection results of the sensor of the robot 40. Therefore, calibration can be performed using something other than the position and orientation of the mark 46. In the above example, the calibration target was the tip position orientation of the robot 40, but the calibration target is not limited to the tip position orientation of the robot 40 so long as the position and orientation of the calibration target can be calculated.

### <<Calibration Items>>

The controller 11 sets the calibration range 60 in advance before performing the calibration. The controller 11 also sets the calibration position included in the calibration range 60. The controller 11 sets the calibration position within the calibration range 60.

The controller 11 generates control information for the robot 40 to move the robot 40 to the calibration position. As calibration items, the controller 11 generates information specifying the tip position orientation and information specifying the recognition results of the mark 46 of the robot 40 when the robot 40 has been moved to the calibration position. The calibration items are, for example, information about the coordinates. Specifically, a calibration item is, for example, coordinate information representing the tip position orientation based on the detection results of the sensor of the robot 40 obtained when the robot 40 is moved to the calibration position, or coordinate information representing the tip position orientation based on the recognition results of the mark 46 recognized by the spatial information acquiring unit 20.

The controller 11 may generate a calibration item as described below.

The controller 11 acquires, for example, information about the actual field of view size of the spatial information acquiring unit 20 or information about the FOV from the spatial information acquiring unit 20. The controller 11 sets the calibration range 60 based on the actual field of view size or FOV of the spatial information acquiring unit 20 and the work area of the robot 40. The controller 11 may set the calibration range 60 based on the position of the object 50 in the operational space of the robot 40. The controller 11 may set the calibration range 60 based on depth information or point group information of the object 50 detected by the spatial information acquiring unit 20. In FIG. 2, the shape of the calibration range 60 is set as a quadrilateral pyramidal shape. The shape of the calibration range 60 is not limited to this shape and may be set to various other shapes.

The controller 11 makes the tip position orientation based on the sensor of the robot 40 match the tip position orientation based on the image from the spatial information acquiring unit 20. Specifically, the controller 11 moves the robot 40 to a first position. The controller 11 generates control information for operating the robot 40 so that the mark 46 of the robot 40 comes to be at the prescribed position and orientation and moves the robot 40 to the first position by controlling the robot 40 based on the control information. The first position may be a prescribed position included in the FOV of the spatial information acquiring unit 20. The first position may be, for example, a center position of the FOV of the spatial information acquiring unit 20. The controller 11 acquires an image of the mark 46 once the robot 40 has moved to the first position, and calculates the position and orientation of the mark 46 as the tip position orientation based on the image. The controller 11 also calculates the tip position orientation based on the sensor. Based on a comparison of the tip position orientation based on the image and the tip position orientation based on the sensor, the controller 11 corrects the control information for the robot 40 so that the position of the robot 40 becomes the first position, based on the detection results of the sensor, in the image. By moving the robot 40 based on the corrected control information, the controller 11 updates the state of the robot 40 so that the position of the robot 40 in the coordinate system of the robot 40 and the position of the robot 40 in the coordinate system of the spatial information acquiring unit 20 match each other. In other words, the controller 11 can be said to update the state of the robot 40 so that the position of the robot 40 becomes the first position in the image.

The controller 11 may generate a position, within the calibration range 60, that is a candidate for a calibration position that is different from the first position. The candidate calibration position is also referred to as a second position. The second position is included in the calibration range 60. The controller 11 estimates what the state of the robot 40 will be if the robot 40 moves to the second position by simulating the motion of the robot 40. In other words, the controller 11 calculates the state of the robot 40 if the robot 40 is assumed to move to the second position. As a result, the controller 11 can determine whether the robot 40 can move to the second position.

If the state of the robot 40 when the robot 40 is assumed to move to the second position is a state in which the robot 40 is not in contact with the object 50, is a state that is within the ranges of motion of the j oints and is a state that is not a singular point, the controller 11 registers the second position as a calibration position. If the controller 11 registers the second position as a calibration position, the controller 11 generates, as multiple calibration items, information identifying the tip position orientation based on the detection results of the sensor of the robot 40 and information identifying the tip position orientation based on the recognition results of the mark 46 of the robot 40 when the robot 40 has been moved to the second position. If the controller 11 does not register the second position as a calibration position, the controller 11 may generate a new second position at a different position and determine whether the new second position can be registered as a calibration position. When numerical values representing the angles of the joints of the robot 40 lie within the ranges of motion, the controller 11 may determine that the state of the robot 40 is a state that is not joint-limited. When the numerical values representing the angles of the joints of the robot 40 lie outside the ranges of motion, the controller 11 may determine that the state of the robot 40 is a joint-limited state.

A singular point corresponds to an orientation where the robot 40 cannot be controlled due to the structure of the robot 40. If the path along which the robot 40 moves includes a singular point, the robot 40 will move at high speed (runaway) in the vicinity of the singular point and stop at the singular point. Singular points of the robot 40 fall into the following three categories (1) through (3).
(1) Points that are outside the work area when the robot 40 is controlled up to the vicinity of the outer limit of the work area. (The work area is the area corresponding to the operational space of the robot 40.)
(2) Points that are inside the work area but are directly above or below the robot base when controlling the robot 40.
(3) Points (wrist alignment singular points) where the joint angle one joint before the joint at the end of the arm 42 of the robot 40 is zero or 180 degrees.

The controller 11 may determine that the state of the robot 40 is a singular point state when a numerical value representing the state of the robot 40 matches a numerical value representing a state that is a singular point. The controller 11 may determine that the state of the robot 40 is a singular point state when the difference between the numerical value representing the state of the robot 40 and the numerical value representing a state that is a singular point is less than a prescribed value. Examples of a numerical value representing the state of the robot 40 may include, for example, the angle of a joint of the arm 42 or the torque of a motor that drives the robot 40.

As described above, the controller 11 sets the calibration range 60 and sets the calibration position within the calibration range 60. In addition, as calibration items, the controller 11 generates information specifying the tip position orientation of the robot 40 and information specifying the recognition result of the mark 46 of the robot 40 when the robot 40 has been moved to the calibration position.

### <<Performing Calibration»

The controller 11 performs the calibration so that the calibration item of the tip position orientation relating to the recognition results of the mark 46 matches the calibration item of the tip position orientation relating to the detection results of the sensor of the robot 40. Specifically, the controller 11 moves the robot 40 to the calibration position. The controller 11 acquires, from the spatial information acquiring unit 20, the recognition results of the mark 46 of the robot 40 for when the robot 40 has moved to the calibration position. The controller 11 calculates the relative positional relationship between the calibration item of the tip position orientation acquired as the recognition result of the mark 46 and the calibration item of the tip position orientation based on the sensor of the robot 40. The relative positional relationship corresponds to the difference in coordinates and the difference in angle between the two calibration items. The controller 11 corrects the coordinate system of the spatial information acquiring unit 20 so as to align the coordinate system of the spatial information acquiring unit 20 with the coordinate system of the robot 40 in order that the error in coordinates and the error in angle corresponding to the relative positional relationship for the two calibration items are zero or close to zero (i.e., the errors are below prescribed values). In this way, the controller 11 can calculate the relative positional relationship by making the recognition result of the mark 46 when the robot 40 has moved to the calibration position match the tip position orientation identified by the sensor of the robot 40.

Specifically, let us assume that the controller 11 corrects the (X, Y, Z) coordinate system of the spatial information acquiring unit 20 to match the (X_RB, Y_RB, Z_RB) coordinate system of the robot 40 by performing the calibration. The controller 11 may identify the relationship between the coordinate system of the spatial information acquiring unit 20 and the coordinate system of the robot 40 by performing the calibration.

### <Response When Abnormality Occurs>

As described above, calibration is used to identify the relationship between the coordinate system of the spatial information acquiring unit 20 and the coordinate system of the robot 40. In this embodiment, the coordinate system of the spatial information acquiring unit 20 and the coordinate system of the robot 40 match each other. The relationship between the coordinate systems may change for various reasons. The relationship between the coordinate systems may change when an abnormality occurs in the robot 40 or the robot control system 1. The relationship between the coordinate systems may change when the robot 40 is stopped or when the robot 40 is started.

When the controller 11 starts the robot 40 normally after calibration has been performed at least once or when the controller 11 starts the robot 40 in order to recover from an abnormality, the controller 11 determines whether the relationship between the coordinate systems identified by the calibration has changed. If the relationship between the coordinate systems has not changed, the controller 11 does not need to perform correction or calibration of the relationship between the coordinate systems. On the other hand, if the relationship between the coordinate systems has changed when the robot 40 is started, the controller 11 determines whether the relationship between the coordinate systems can be corrected. If the controller 11 can correct the relationship between the coordinate systems, the controller 11 corrects the relationship between the coordinate systems and does not perform calibration. If the controller 11 cannot correct the relationship between the coordinate systems, the controller 11 identifies the relationship between the coordinate systems anew by performing recalibration.

In other words, a determination may be made as to the need to perform calibration when the robot 40 stops or when the robot 40 is started. When the robot 40 stops, it is not limited to when the robot 40 stops abnormally and may also include times when the robot 40 has completed a specified task. When the robot 40 is started, it is not limited to when the robot 40 is started after stopping due to an abnormality and may also include times when the robot 40 is started for a specified task.

When the controller 11 starts the robot 40 with the robot 40 having been calibrated at least once, the controller 11 determines whether the relationship between the coordinate system of the robot 40 and the coordinate system of the spatial information acquiring unit 20 has changed and whether recalibration is necessary, as described below.

The controller 11 moves the robot 40 to a measurement position. The controller 11 sets the measurement position to a point included in the calibration range 60. Measurement positions may include, for example, some of the calibration positions. The measurement positions may include, for example, a corner point in the calibration range 60. The measurement positions may include, for example, the first position or the second position described above, or may include a position different from the first position and the second position. The measurement positions may include a calibration position used in a previous calibration or may include a different position from the previous calibration position. The controller 11 may, for example, set a point inside the calibration range 60 as the measurement position. Not limited to these points, the controller 11 may set various points included in the calibration range 60 as measurement positions. The controller 11 may acquire a measurement position of the movement destination of the robot 40.

The controller 11 acquires a recognition result of the mark 46 for when the robot 40 is moved to the measurement position. The controller 11 calculates the position of the robot 40 as a measurement result based on the recognition result of the mark 46. The controller 11 calculates the difference between the initial value of the measurement position and the measurement result. Since the controller 11 moves the robot 40 to the measurement position based on the detection result of the sensor, the controller 11 may calculate the difference between the set measurement position itself and the measurement result without calculating the position of robot 40 based on the sensor. The controller 11 may acquire the detection result of the sensor for when the robot 40 is moved to the measurement position, calculate and acquire the position of the robot 40 based on the sensor from this detection result as the measurement position, use the calculated measurement position as the initial value of the measurement position, and calculate the difference from the measurement result.

The controller 11 determines whether to correct the relationship between the coordinate systems based on the difference between the initial value of the measurement position and the measurement result. For example, the controller 11 determines that the relationship between the coordinate systems is to be corrected when the difference between the initial value of the measurement position and the measurement result is greater than a prescribed threshold. When measurement results are acquired at multiple measurement positions, the controller 11 determines that the relationship between the coordinate systems is to be corrected when the difference between the initial value of at least one measurement position and the corresponding measurement result is greater than a prescribed threshold. When the difference between the initial value of the measurement position and the measurement result is less than or equal to the prescribed threshold, the controller 11 determines that correction of the relationship between the coordinate systems and recalibration are not necessary. The controller 11 may set the prescribed threshold as appropriate. The controller 11 may set the prescribed threshold based on, for example, the specification of positional accuracy during operation of the robot 40.

When correcting the relationship between the coordinate systems, the controller 11 may correct the coordinate system of the spatial information acquiring unit 20 so that the coordinate system of the spatial information acquiring unit 20 is aligned with the coordinate system of the robot 40. The controller 11 may correct the coordinate system of the robot 40 so as to align the coordinate system of the robot 40 with the coordinate system of the spatial information acquiring unit 20.

Specifically, the controller 11 may correct the coordinate system of the spatial information acquiring unit 20 or the coordinate system of the robot 40 through rotational or translational movement. The controller 11 may correct the coordinate system of the spatial information acquiring unit 20 or the coordinate system of the robot 40 by enlarging or reducing the coordinate system. The controller 11 may correct distortion in the coordinate system of the spatial information acquiring unit 20 or the coordinate system of the robot 40. The controller 11 may calculate a corrected value of the measurement position based on the correction of the coordinate system.

The controller 11 may acquire the tip position orientation of the robot 40 at one measurement position and correct the coordinate system in rotational directions as well as translational directions based on information such as an angle of rotation representing the orientation of the mark 46.

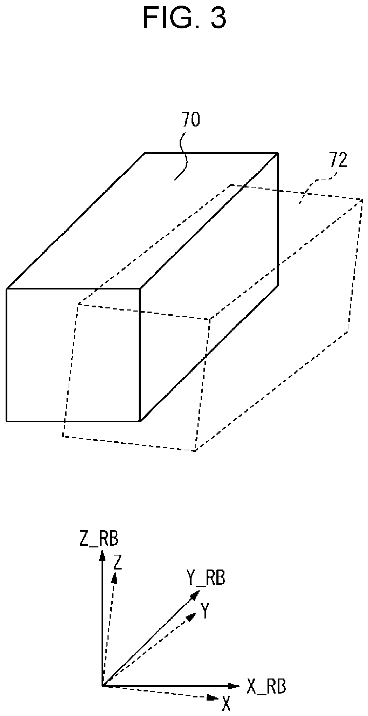

A specific example of a change in the relationship between coordinate systems is illustrated in FIG. 3. Suppose that a measurement position model 70 having the coordinates of measurement positions as vertices is defined based on the (X_RB, Y_RB, Z_RB) coordinate system of the robot 40. The controller 11 moves the robot 40 to each vertex (measurement position) of the measurement position model 70 and acquires the recognition results of the mark 46. Suppose that when the recognition results of the mark 46 acquired based on the (X, Y, Z) coordinate system of the spatial information acquiring unit 20 are aligned to the (X_RB, Y_RB, Z_RB) coordinate system of the robot 40, the calculated measurement results are represented by a measurement results model 72 having the coordinates of the measurement results as vertices. The measurement position model 70 corresponds to the set measurement positions themselves or the initial values of the measurement positions when the robot 40 is moved to the measurement positions based on detection results of the sensor. The measurement results model 72 corresponds to measurement results obtained when the recognition results of the mark 46 when the robot 40 is moved to the measurement position are made to match the (X_RB, Y_RB, Z_RB) coordinate system of the robot 40. Based on a comparison of the measurement position model 70 and the measurement results model 72, the controller 11 determines whether the relationship between the coordinate systems has changed. In this embodiment, let us assume that the coordinate system of the robot 40 and the coordinate system of the spatial information acquiring unit 20 have been made to match each other by previously performed calibration. In the state illustrated in FIG. 3, the coordinate system of the spatial information acquiring unit 20 has changed in a rotational direction and a translational direction relative to the coordinate system of the robot 40. The controller 11 may correct the coordinate system of the spatial information acquiring unit 20 in the translational direction and the rotational direction to match the coordinate system of the robot 40.

After correcting the relationship between the coordinate systems, the controller 11 moves the robot 40 to the corrected measurement positions and acquires measurement results again. The corrected measurement positions are also referred to as the corrected positions. Measurement results acquired after correcting the relationship between the coordinate systems are also referred to as corrected measurement results. If the difference between the corrected positions and the corrected measurement results is less than or equal to a prescribed threshold, the controller 11 determines that the relationship between the coordinate systems has returned to the relationship at the time the previous calibration was performed due to the correction and that recalibration of the robot 40 is not necessary. The controller 11 updates the relative positional relationship based on the corrected results of the relationship between the coordinate systems. Specifically, the controller 11 may update the relative positional relationship based on the difference between the initial values of the measurement positions and the corrected positions.

If the difference between the corrected positions and the corrected measurement results is greater than the prescribed threshold, the controller 11 determines that the relationship between the coordinate systems has not returned to the relationship at the time the previous calibration was performed due to the correction and that recalibration of the robot 40 is necessary.

The correction of the coordinate system described above may be performed when an abnormality occurs. Specifically, correction of the coordinate system may be performed when the robot 40 is restarted after the robot 40 stops in an abnormal manner. Correction of the coordinate system may be performed when the (X, Y, Z) coordinate system of the spatial information acquiring unit 20 has changed due to movement of the spatial information acquiring unit 20. Correction of the coordinate system is not limited to being performed when an abnormality occurs and may be performed when the robot 40 is started.

### (Example Procedure of Robot Control Method)

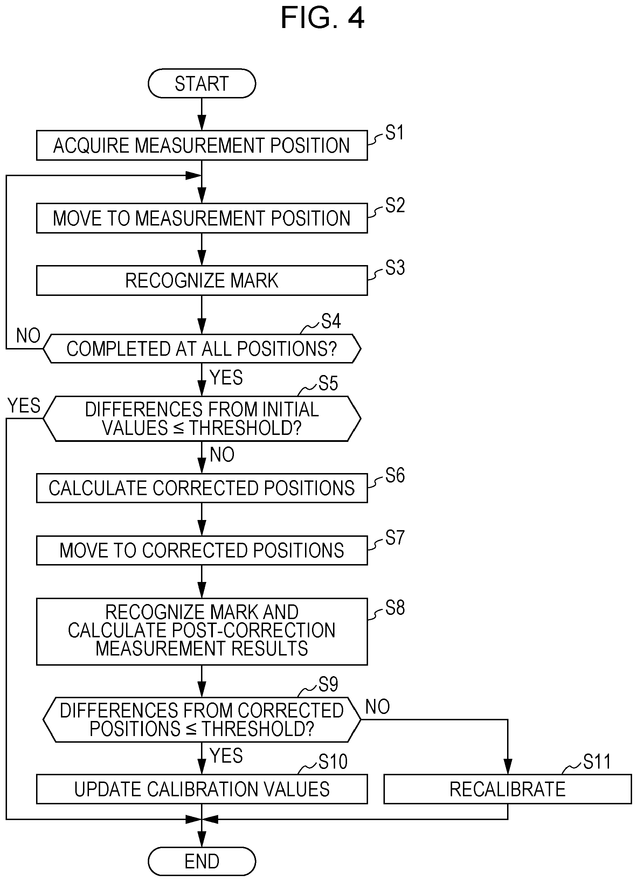

The controller 11 of the robot control device 10 may execute a robot control method including the procedure of the flowchart illustrated in FIG. 4 when the robot 40 starts or recovers from an abnormality, etc. The robot control method may be realized as a robot control program to be executed by a processor constituting the controller 11. The robot control program may be stored on a non-transitory computer-readable medium.

The controller 11 acquires a measurement position (Step S1). The controller 11 moves the robot 40 to the measurement position (Step S2). The controller 11 acquires a recognition result of the mark 46 at the measurement position to which the robot 40 has moved (Step S3). The controller 11 determines whether recognition of the mark 46 at all measurement positions is complete (Step S4). If recognition of the mark 46 at all the measurement positions is not complete (Step S4: NO), the controller 11 returns to the procedure of Step S2.

When the controller 11 has completed recognition of the mark 46 at all measurement positions (Step S4: YES), the controller 11 determines whether the differences between the initial values of the measurement positions and the measurement results are less than or equal to a prescribed threshold (Step S5). If the differences between the initial values of the measurement positions and the measurement results are less than or equal to the prescribed threshold (Step S5: YES), the controller 11 terminates the execution of the procedure in the flowchart in FIG. 4.

If the differences between the initial values of the measurement positions and the measurement results are not less than or equal to the prescribed threshold (Step S5: NO), that is, if the differences between the initial values of the measurement positions and the measurement results are greater than the prescribed threshold, the controller 11 corrects the coordinate system and calculates the corrected positions (Step S6). The controller 11 moves the robot 40 to the corrected positions (Step S7). The controller 11 acquires the recognition results of the mark 46 at the corrected positions to which the robot 40 has moved and acquires the corrected measurement results (Step S8).

The controller 11 determines whether the differences between the corrected positions and the corrected measurement results are less than or equal to the prescribed threshold (Step S9). If the differences between the corrected positions and the corrected measurement results are less than or equal to the prescribed threshold (Step S9: YES), the controller 11 calculates corrected values based on the differences between the initial values of the measurement positions and the measurement results and updates calibration values (Step S10). The calibration values represent a relative positional relationship. After execution of the procedure in Step S10, the controller 11 terminates execution of the procedure of the flowchart in FIG. 4.

If the differences between the corrected positions and the corrected measurement results are not less than or equal to the prescribed threshold (Step S9: NO), that is, if the differences between the corrected values of the measurement positions and the measurement results are greater than the prescribed threshold, the controller 11 determines that recalibration of the robot 40 is needed (Step S11). After execution of the procedure in Step S 11, the controller 11 terminates execution of the procedure of the flowchart in FIG. 4. After performing the procedure in Step S11, the controller 11 may perform recalibration of the robot 40.

### (Summary)

As described above, in the robot control device 10 and the robot control method according to this embodiment, the coordinate system is corrected when the differences between measurement positions and measurement results are greater than a prescribed threshold such as when the robot 40 is started or is recovering from an abnormality. If the differences between the measurement positions and the measurement results of the coordinate system after correction are greater than a prescribed threshold, recalibration may be determined to be necessary. Conversely, recalibration may be determined to be unnecessary when the differences between the measurement positions and the measurement results of the coordinate system after correction are less than or equal to the prescribed threshold. In this way, the workload at a time when an abnormality occurs can be reduced.

Although embodiments of the present disclosure have been described based on the drawings and examples, please note that one skilled in the art can make various variations or changes based on the present disclosure. Please note that, therefore, these variations or changes are included within the scope of the present disclosure. For example, the functions and so on included in each constituent part can be rearranged in a logically consistent manner, and multiple constituent parts and so on can be combined into one part or divided into multiple parts.

All of the constituent elements described in the present disclosure and/or all of the disclosed methods or all of the steps of disclosed processing can be combined in any combination, except for combinations in which their features are mutually exclusive. Each of the features described in the present disclosure may be replaced by alternative features that serve the same, equivalent, or similar purposes, unless explicitly stated to the contrary. Therefore, unless explicitly stated to the contrary, each of the disclosed features is only one example of a comprehensive set of identical or equivalent features.

Furthermore, the embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

### REFERENCE SIGNS

- 1: robot control system
- 10: robot control device (11 controller, 12 storage unit)
- 20: spatial information acquiring unit
- 40: robot (42 arm, 44 end effector, 46 mark)
- 50: object
- 60: calibration range
- 70: measurement position model
- 72: measurement results model

## Claims

1. A robot control device comprising:
a controller configured to control a robot,
wherein the controller is configured to
acquire a measurement position of a movement destination of the robot,
acquire a measurement result of a position of the robot calculated based on spatial information about an operational space of the robot acquired by a spatial information acquiring unit, and
determine whether to perform calibration of the robot based on the measurement position and the measurement result.

2. The robot control device according to claim 1,
wherein the controller is configured to correct a coordinate system of the spatial information acquiring unit or a coordinate system used to control the robot based on a difference between the measurement position and the measurement result.

3. The robot control device according to claim 2,
wherein the controller is configured to correct the coordinate system of the spatial information acquiring unit or the coordinate system used to control the robot with respect to rotation, translation, enlargement or reduction, or distortion.

4. The robot control device according to claim 2 or 3,
wherein the controller is configured to move the robot to the measurement position in the corrected coordinate system and calculate the position of the robot as a corrected measurement result, and
if a difference between the measurement position and the corrected measurement result is greater than or equal to a prescribed value, calibration of the robot is performed.

5. The robot control device according to any one of claims 1 to 4,
wherein, among a plurality of the robots, the controller is configured to be able to determine whether or not to perform the calibration again for a robot for which the calibration has been performed at least once.

6. A robot control system comprising:
the robot control device according to any one of claims 1 to 5, and the robot.

7. A robot control method comprising:
acquiring a measurement position of a movement destination of the robot using a controller configured to control a robot;
acquiring a measurement result of a position of the robot calculated based on spatial information about an operational space of the robot acquired by a spatial information acquiring unit; and
determining whether to perform calibration of the robot based on the measurement position and the measurement result.
